# EUROPEAN PATENT SPECIFICATION

(11) **EP 2 622 953 B1**
(45) Date of publication and mention of the grant of the patent: **20.06.2018**
(21) Application number: 12008088.2
(22) Date of filing: 03.12.2012
(51) Int. Cl.: A01B 33/02, G05G 5/00

(54) **Electric cultivators**
Elektrische Ackerfräsen
Cultivateurs électriques

(30) Priority: 02.12.2011 JP 2011264418
(43) Date of publication of application: 07.08.2013
(73) Proprietor: Makita Corporation, Anjo-shi, Aichi 446-8502 (JP)
(72) Inventor: Tozawa, Katsumi, Anjo-shi Aichi, 446-8502 (JP); Takeda, Shigeru, Anjo-shi Aichi, 446-8502 (JP)
(74) Representative: Müller-Boré & Partner Patentanwälte PartG mbB

(56) References cited:
- EP-A1- 0 599 550
- EP-A1- 2 263 434
- US-A- 5 203 147
- US-A1- 2003 178 208

## Description

This invention relates to cultivators (administrators) mainly for use in agricultural work, such as the cultivation of fields, and, in particular, to electric cultivators incorporating electric motors as drive sources.

In recent years, as a cultivator mainly for use in agricultural work, there has been provided a relatively small electric cultivator using an electric motor as the drive source. Japanese Patent No. 3302273 discloses a technique related to an electric cultivator having an operation switch which is provided in a handle portion thereof and which is prevented from being erroneously operated through contrivance in terms of the positions of a safety lock button and a switch lever while achieving an improvement in terms of operability. Further, Japanese Patent No. 4160427 discloses a technique related to an electric cultivator in which the operation of turning ON/OFF three operation members are electrically controlled to thereby achieve an improvement in terms of operability while preventing an erroneous operation thereof.

In this way, mainly regarding the operating portion of an electric cultivator, various improvements have been made in terms of its operability while securing an erroneous operation preventing function to prevent an unintentional starting of a main body portion thereof. In addition, when preventing erroneous operation, in particular, through a mechanical structure, it is also necessary to enhance the durability thereof. For example, there has been provided a technique related to an unlock mechanism in which a first switch and a second switch for starting a main body portion are provided on a handle portion and in which an electric motor of the main body portion is not started unless these two switches are turned ON in a predetermined order. Regarding the unlock mechanism of such a mechanical structure, there has been a demand for higher durability.

Therefore, there has been a need in the art for improving the durability of the switches of the unlock mechanism.
EP 2 263 434 A1 discloses an electric rotary tiller including a safety device for an operation lever which is configured to turn about a horizontal shaft. The operation lever is provided with a grasping portion formed behind the horizontal shaft and a switch operation portion formed in front of the horizontal shaft. A moving shaft is provided at a position more rearward than the horizontal shaft, wherein the moving shaft is supported in a lateral direction intersecting the grasping portion and which is slidable in the lateral direction. The moving shaft is formed with a small diameter portion and a large diameter portion, wherein the large diameter portion is located in the turning track of the grasping portion when the moving shaft is in its initial position, preventing the turning of the operation lever. For unlocking, the moving shaft can be pushed against a biasing force so as to be shifted laterally, such that the large diameter portion is moved out of the turning track of the grasping portion and the small diameter portion is positioned in the turning track of the grasping portion, which enables the turning of the operation lever to turn on the electric motor.

According to the invention, an electric cultivator includes an electric motor serving as a drive source, and a switch device including a first operation member, a second operation member, and a switch main body. The electric motor is started through a turning-ON operation of the switch main body. The first operation member includes a first engaging portion. The second operation member includes a second engaging portion. When the second operation member is turned ON with the first operation member being turned ON according to a correct operation procedure, the first engaging portion and the second engaging portion are engaged with each other to turn ON the switch main body. When the second operation member is turned ON before the first operation member is turned ON according to an erroneous operation procedure, the second engagement portion does not engage the first engagement portion, so that the switch main body is not turned ON.

In this way, when the erroneous operation procedure is followed, the engagement of the second engagement portion with the first engagement portion may not occur and thus prevent the turning-ON of the second operation member (i.e., to cause it to fail). Thus, in the case of the erroneous operation procedure, an unlock function may be achieved without resulting application of an excessive force to the first engagement portion and the second engagement portion, so that it is possible to improve the durability of the switch device.

The first operation member and the second operation member are rotatable about a common axis, and the second operation member is rotatably supported by the first operation member. This arrangement makes the switch device more compact.

The switch device includes a switch case. The first operation member is supported by the switch case so as to be movable in an axial direction and rotatable about the axis. The second operation member is fixed in position in the axial direction with respect to the switch case. The first operation member is movable from an OFF position to an ON position with respect to the axial direction. The second operation member rotates from an OFF position to an ON position in the rotational direction. As the second operation member rotates from the OFF position to the ON position while the first operation member is positioned at the ON position, the second engaging portion engages the first engaging portion to cause rotation of the first operation member, so that the switch main body is turned ON.

The switch main body may be positioned outside of a rotation range of the second operation member. With this arrangement, the switch main body may suffer no damage even in the case that the second operation member is forcibly operated. As a result, it is possible to improve the durability of the switch device.

The first operation member may be provided with a switch operating portion separate from the first engagement portion. The switch operating portion may be moved through a turning-ON operation of the second operation member according to the correct operation procedure to thereby turn ON the switch main body. With this arrangement, the switch operating portion provided separately from the first engagement portion may interact with the switch main body for turning ON the same. Therefore, as compared with the construction in which the switch main body is turned ON through direct interaction of the first engagement portion with the switch main body, it is possible to improve the durability of the engagement portions and to eventually improve the durability of the switch device.

The first engaging portion and the switch operation portion may be formed integrally with the first operation member.

The cultivator according to the invention further includes a first biasing member and a second biasing member configured to bias the first operation member and the second operation member, respectively, toward OFF positions with respect to rotation. With this arrangement, the biasing force necessary for rotating both the first operation member and the second operation member according to the correct operation procedure may be set to be larger than the biasing force for rotating the second operation member (without causing engagement with the first operation member) according to the erroneous operation procedure. Thus, it is possible to provide a difference in the operational feel (operational force) for the user between the casewhere the correct operation procedure is followed and the case where the erroneous operation procedure is followed. This can thereby enable the user to recognize whether or not the operation procedure being followed is correct.

The first biasing member and the second biasing member are configured by a single biasing member, such as a leaf spring, a compression spring or a tension spring. With this arrangement, it is possible to reduce the number of components. For example, one end of the biasing member may be engaged with the first operation member, and the other end of the biasing member may be engaged with the second operation member. In this way, it is possible to bias the first and second operation members toward their respective OFF positions with respect to the rotational direction.

Additional objects, features, and advantages, of the present invention will be readily understood after reading the following detailed description together with the claims and the accompanying drawings, in which:
Fig. 1 is an overall left-hand side view of an electric cultivator according to an embodiment of the present invention;
Fig. 2 is an overall longitudinal sectional view of the electric cultivator according to the present embodiment;
Fig. 3 is an overall perspective view, as seen obliquely from behind and from the left-hand side, of the electric cultivator according the present embodiment;
Fig. 4 is a side view, as seen from the right-hand side, of the internal structure of a switch device, the diagram showing a non-operational state (initial state) in which neither the first nor the second operation member is being operated;
Fig. 5 is a longitudinal sectional view of the switch device taken along the arrow line (V)-(V) of Fig. 4;
Fig. 6 is a perspective view, as seen obliquely from the right-hand side and from the front side, of the internal structure of the switch device in the non-operational state with a right-hand side half of its case removed;
Fig. 7 is a perspective view, as seen obliquely from the right-hand side and from the front side, of the internal structure of the switch device with the right-hand side half of the case
   removed, the diagram showing a state in which a first operation member has been turned ON by the correct operation procedure;
Fig. 8 is a perspective view, as seen obliquely from the right-hand side and from the front side, of the internal structure of the switch device with the right-hand side half of the case removed, the diagram showing a state in which a second operation member has been turned ON by the correct operation procedure to turn ON the switch main body; and
Figs. 9(A) through 9(D) are schematic diagrams illustrating the operation of the switch device according to the present embodiment, of which Fig. 9(A) illustrates the non-operational state; Fig. 9(B) illustrates the state in which the first operation member has been turned ON by the correct operation procedure; Fig. 9(C) illustrates the state in which the second operation member has been turned ON by the correct operation procedure; and Fig. 9(D) illustrates the state in which the second operation member has been turned ON by an erroneous operation procedure.

Each of the additional features and teachings disclosed above and below may be utilized separately or in conjunction with other features and teachings to provide improved electric cultivators. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

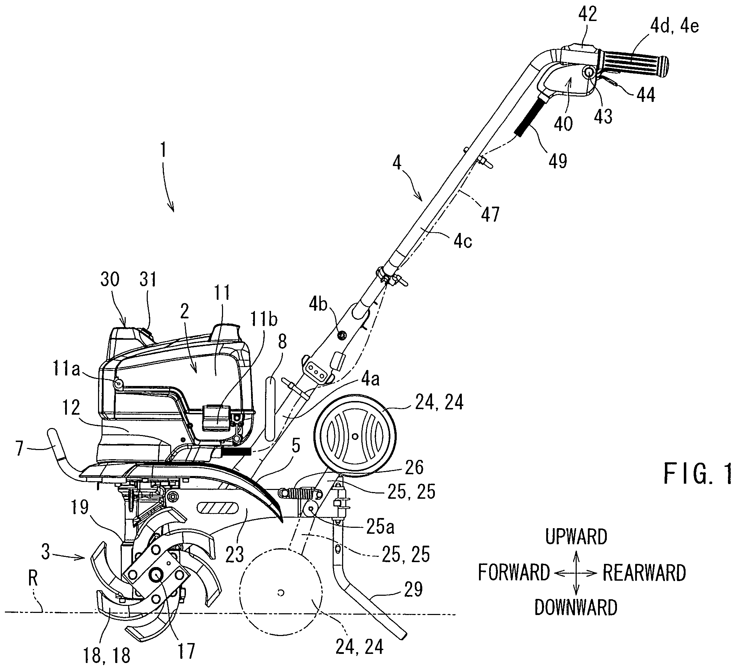

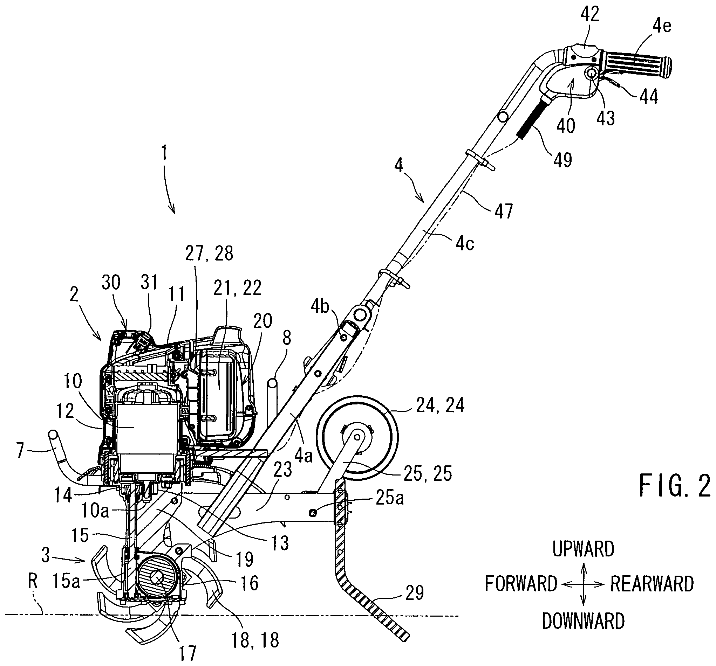

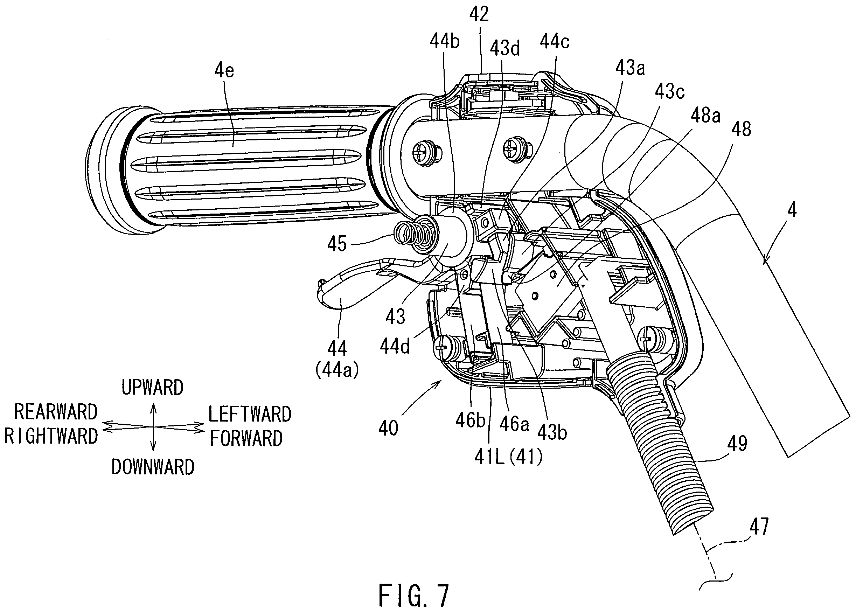

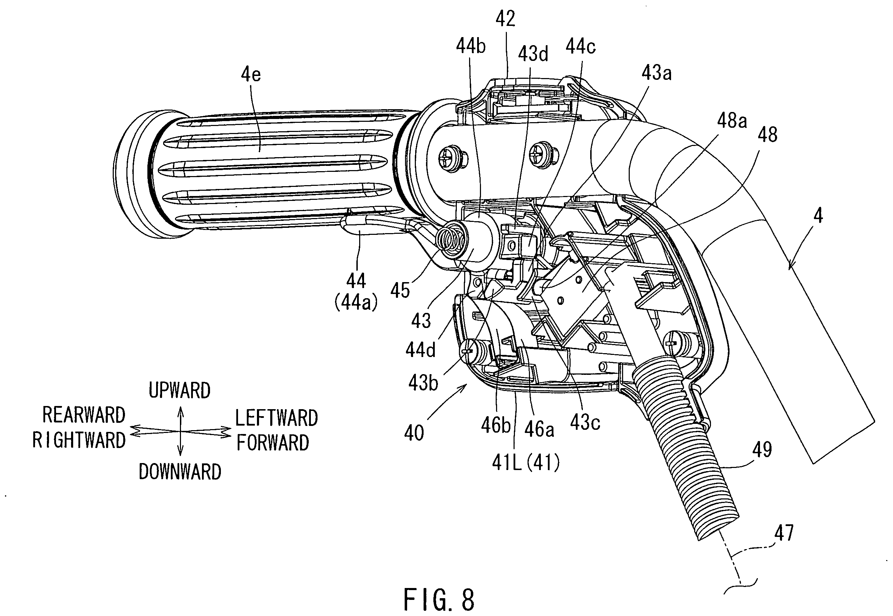

A representative embodiment of the present invention will now be described with reference to Figs. 1 through 9(D). An electric cultivator 1 may be equipped with a main body portion 2 having an electric motor 10 disposed therein as a drive source, a mechanism portion 3, and a handle portion 4. As shown in Fig. 2, the electric motor 10 may be supported within a main body case 12 of the main body portion 2 in a vertical manner, with an output shaft 10a of the electric motor 10 directed downwards. A driving gear 13 is mounted to the output shaft 10a. The driving gear 13 may preferably mesh with a driven gear 14. The driven gear 14 may be fixed to the upper portion of a vertically elongated drive shaft 15. The drive shaft 15 may be rotatably supported by a mechanism portion case 19 mounted to the bottom of the main body portion case 12, so that the drive shaft 15 can rotate about an axis parallel to a motor axis (the rotation axis of the output shaft 10a of the electric motor 10). A worm gear 15a is formed on the lower portion of this drive shaft 15. This worm gear 15a is in mesh with a worm wheel 16. The worm wheel 16 is mounted to an output shaft 17. The output shaft 17 is rotatably supported at the lower portion of the mechanism portion case 19, so that the output shaft 17 can rotate about a crosswise axis, which is an axis crossing the axis of the drive shaft 15. The right and left opposite end portions of the output shaft 17 may protrude from the right-hand and left-hand side portions of the mechanism portion case 19. Cultivation claws 18 may be respectively mounted to the right-hand and left-hand protruding portions.

When the electric motor 10 is started, the drive shaft 15 is rotated via the mesh-engagement of the driving gear 13 and the driven gear 14. The rotation of the drive shaft 15 is transmitted to the output shaft 17 via the mesh-engagement of the worm gear 15a and the worm wheel 16. As the output shaft 17 rotates, the right and left cultivation claws 18 may rotate to perform cultivation of a cultivation ground R.

A rotary cover 5 may extend over each of the right and left cultivation claws 18. The rotary cover 5 may protrude mainly to the right and left sides and to the rear side from the lower portion of the main body portion case 12. Due to the rotary cover 5, earth and stones moved up from the cultivation ground by the right and left cultivation claws 18 may be prevented from being scattered toward the user.

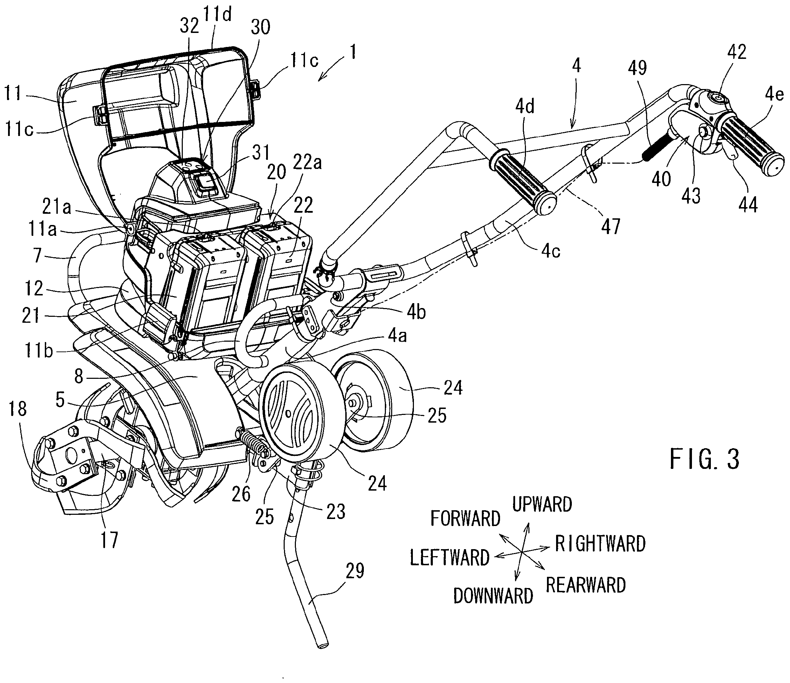

An auxiliary support rod 23 may be mounted to the mechanism portion case 19. The auxiliary support 23 may extend horizontally backwards (toward the user) from the mechanism portion case 19. Right and left movement wheels 24 and a single resistance bar 29 may be mounted to this auxiliary support 23. The right and left movement wheels 24 may be rotatably supported at the pivoting ends of stays 25 that may be vertically pivotally supported by the auxiliary support 23 via support shafts 25a. As shown in Figs. 1 and 3, a tension spring 26 may be provided between the right and left stays 25 and the auxiliary support 23. Due to the biasing force of this tension spring 26, the right and left movement wheels 24 can be retained in position both at a storage position indicated by the solid line in Fig. 1 and at an extraction position on the side of the ground indicated by the chain double-dashed line in Fig. 1. In this way, the user can store the right and left movement wheels 24 at the upper position or, conversely, extract them downwardly to bring them into contact with the cultivation ground R by vertically pivoting the right and left stays 25 through manual operation against the biasing force of the tension spring 26.

The resistance bar 29 may be a single bar member gently bent into a dogleg shape. The lower end portion of the resistance bar 29 may dig into the cultivation surface R to impart a movement resistance thereto, thereby exerting the function of generating a cultivation force for cultivating the cultivation surface R by the right and left cultivation claws 18. This resistance bar 29 may be mounted to the rear end portion of the auxiliary support 23 such that its position in the vertical direction can be changed. In addition, the resistance bar 29 may be detached from the auxiliary support 23 in order to vertically reverse its mounting orientation. As shown in the drawings, in the operational position, in which the resistance bar 29 downwardly protrudes from the auxiliary support 23, the right and left movement wheels 24 may be retracted to the storage position on the upper side. In this state, the cultivating operation may be performed. Conversely, in the state in which the resistance bar 29 has been moved to the retracted position, which may be the uppermost position, or in which the resistance bar 29 has been retracted through vertical reversal to a position where it protrudes upwardly, the right and left movement wheels 24 may be positioned at the extraction position indicated by the chain double-dashed line in Fig. 1. In this way, the user can move the cultivator 1 through pushing operation by causing the right and left movement wheels 24 to roll on the cultivation surface R, with the cultivation claws 18 raised above the cultivation surface R.

A battery cover 11 may be provided at the upper portion of the main body case 12. The battery cover 11 may have a relatively large side and can be pivoted about a support shaft 11a, so that the battery cover 11 can be opened as it is pivoted upward and forward. The opening and/or closing state of the battery cover 11 may be detected by a sensor (not shown). When it is detected by the sensor that the battery cover 11 is opened, a power source circuit associated with the electric motor 10 may be broken independently of the operational condition of a switch device 40 that will be described later. This will thereby prevent the unintentional starting of the electric motor 10.

Two batteries 21 and 22 may be mounted within the battery storage portion 20. The batteries 21 and 22 may be ones mainly used as power sources of hand-held type electric tools such as electric hammers. Therefore, batteries detached from the hand-held type electric tool can be used as the batteries 21 and 22. The batteries 21 and 22 may be high-performance lithium ion batteries, which involve little natural discharge and allow extended recharging. In this embodiment, both batteries 21 and 22 may have a rated voltage of 36 V. Each of the batteries 21 and 22 may include a battery case containing a plurality of battery cells. These batteries 21 and 22 can be repeatedly used through recharging by a battery charger that may be separately prepared.

As shown in Fig. 2, the two batteries 21 and 22 may be positioned at the rear portion of the main body portion 2 and on the rear side of the electric motor 10. Further, as shown in Fig. 3, the two batteries 21 and 22 may be arranged laterally side by side. The front portion of the battery storage portion 20 may be provided with battery mounting portions 27 and 28 for mounting the two batteries 21 and 22 therein. The two battery mounting portions 27 and 28 may have slide-mounting structures which may be the same as battery mounting portions of an electric tool that can use the batteries 21 and 22 as the power source. Thus, each of the battery mount portions 27 and 28 may have right and left slide rail portions and a connector connection portion that may be positioned between the two slide rail portions.

The batteries 21 and 22 may be mounted to and removed from the battery mounting portions 27 and 28 as they are slid vertically with respect to the battery mount portions. Further, the battery 21, 22 may be individually mounted to and removed from the battery mounting portion 27 and 28.

As shown in Fig. 3, lock release claws 21a and 22a are provided at the top portions of the two batteries 21 and 22. When the batteries 21 and 22 are mounted to the battery mounting portions 27 and 28 through downward sliding, lock claws (not shown) may engage the batteries to lock the mounted state. When, in this mounting-lock state, the lock release claws 21a and 22a are pushed down, the engagement of the lock claws may be released. In this lock-released state, the two batteries 21 and 22 can be removed from the battery mounting portions 27 and 28 as they are slid to move upward with respect to the battery mounting portions.

When the batteries 21 and 22 are mounted to the battery mounting portions 27 and 28, one of the batteries 21 and 22 may be brought, through a switching operation described below, into a state of being electrically connected to the power source circuit of the main body portion 2.

A battery operating portion 30 may be provided on the upper surface of the main body portion 2. This battery operating portion 30 may be provided with a changeover switch 31 and an operation display 32. When the changeover switch 31 is switched from right to left or left to right, one of the batteries 21 and 22 may be electrically connected to the power source circuit (i.e., becomes operational) as described above, so that the power can be supplied to the electric motor 10. When the changeover switch 31 is tilted to the left, the left battery 21 may become operational. On the other hand, when the changeover switch 31 is tilted to the right, the right battery 22 may become operational. The operation display 32 may indicate which of the batteries 21 and 22 is operational. The operation display 32 may be provided with two right and left operation lamps emitting a green light when lit, and one warning lamp emitting a red light when lit. When the left-hand side battery 21 becomes effective through tilting operation of the changeover switch 31, the left-hand side operation lamp emits a green light. When the right-hand side battery 22 becomes operational, the right-hand side operation lamp emits a green light. As a result, it is possible for the user to distinguish at a glance from which of the batteries 21 and 22 power is being supplied. When the residual power level of the effective battery 21 or 22 is reduced, the warning lamp may be lit to emit a red light. The warning lamp may also be lit or blink when some abnormality such as occurrence of excess current in the power supply from the battery 21 or 22 and the battery mounting portion 27, 28.

When the battery 21 (or 22) becomes ineffective through the operation of the changeover switch 31, the battery 21 (or 22) may remain mounted to the battery mounting portion 27 (or 28), or may be detached from the battery mounting portion 27 (or 28). By detaching the battery 21 (or 22), it is possible to use the cultivator 1 with its weight reduced. The detached battery 21 (or 22) may be recharged by a separate battery charger, and may then be mounted to the corresponding battery mounting portion again, so that the cultivator 1 can be used for a long period of time.

As described above, the battery storage portion 20 may be closed by the battery cover 11. A waterproof rubber seal lid may be attached to the entire peripheral edge of the opening of the battery cover 11. Thus, in the state in which the battery cover 11 is closed, the rubber seal 11d may be resiliently pressed against the bottom surface of the battery storage portion 20 to thereby prevent the intrusion of rain water or the like from the outside. The closed state of the battery cover 11 may be locked through engagement of lock levers 11b provided on the right and left side portions of the battery storage portion 20 respectively with engagement portions 11c provided on the right and left side portions of the battery cover 11.

The handle portion 4 may extend obliquely upwards from the back side of the main body portion 2. The handle portion 4 may include a stationary portion 4a and a tiltable portion 4c. The stationary portion 4a may be fixed to the auxiliary support rod 23 whereby it extends obliquely backwards and upwards therefrom. The tiltable portion 4c may be connected to the stationary portion 4a via a pivot shaft 4b so as to be tiltable forward and rearward. The tilting position of the tiltable portion 4c with respect to the stationary portion 4a may be adjusted stepwise, so that the height of grip portions 4d and 4e can be adjusted to an optimum position suitable for operation by the user. Further, the tiltable portion 4c can be folded by being forwardly tilted via the pivot shaft 4b.

The front portion of the mechanism portion case 19 and the stationary portion 4a of the handle portion 4 may be provided with carrying handles 7 and 8, respectively. When the cultivator 1 is not in use, the user can carry about the cultivator 1 by holding the carrying handles 7 and 8 with both hands.

As shown in Fig. 3, the tiltable portion 4c may have a forked configuration branching off in a Y-shape to provide the grip portions 4d and 4e to be grasped by the left and right hands of the user, respectively, at the end portions (rear end portions) thereof. A double operation type (double action type) switch device 40 may be provided on the tiltable portion 4c at a position in front of the right-hand side grip portion 4e.

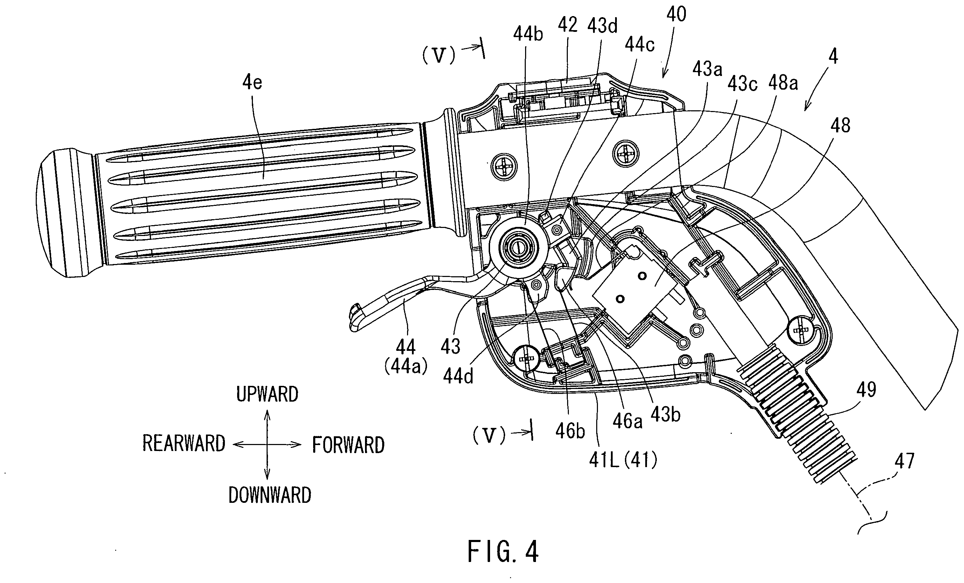

The switch device 40 will be described in detail with reference to Figs. 4 to 9. The switch device 40 may have a switch case 41 with a split structure into right and left halves. In Fig. 4, only the left-hand side case half 41L is shown. The right rear part of the handle portion 4 may be clamped between the left-hand and right-hand side case halves 41L and 41R. Then, by way of screws or like fasteners, the left-hand and right-hand side case halves 41L and 41R may be joined to each other, and at the same time, they may be fixed to the right rear portion of the handle portion 4. In this way, the switch device 40 may be mounted to the handle portion at a position in front of the right-hand side grip portion 4e.

This switch device 40 may include a power switch 42 of a push-button type arranged at the top portion of the switch case 41, a first operation member 43 also of a push-button type arranged on the left-hand side portion of the switch case 41, and a second operation member 44 of a lever type protruding rearwards from the switch case 41. When the power switch 42 at the top portion is depressed with a finger of the right hand grasping the right-hand- side grip portion 4e (turning-ON operation), the power may be supplied to the power source circuit of the main body portion 2, so that the electric motor 10 is brought into a state where it can be started. Thereafter, the second operation member 44 may be pulled (turning ON operation) while keeping the first operation member 43 depressed (turned ON). As a result, the electric motor 10 may start to rotate the right and left cultivation claws 18.

In this embodiment, the switch device 40 is formed as a so-called unlock switch by the incorporation of the first operation member 43 and the second operation member 44. Due to this unlock function, the electric motor 10 starts only when both of the first operation member 43 and the second operation member 44 are turned ON. The electric motor 10 may not start through turning-ON of only one of the operation members.

Further, in this switch device 40, a correct operation order and an erroneous operation order are determined regarding the operation order of the first operation member 43 and the second operation member 44. As described above, the electric motor 10 is started through turning-ON operation in the correct operation order, in which the second operation member 44 is turned ON while keeping the first operation member 43 depressed. If the second operation member 44 is first pulled without keeping the first operation member 43 depressed, it only results in operational failure (ineffective operation), and the electric motor 10 is not started.

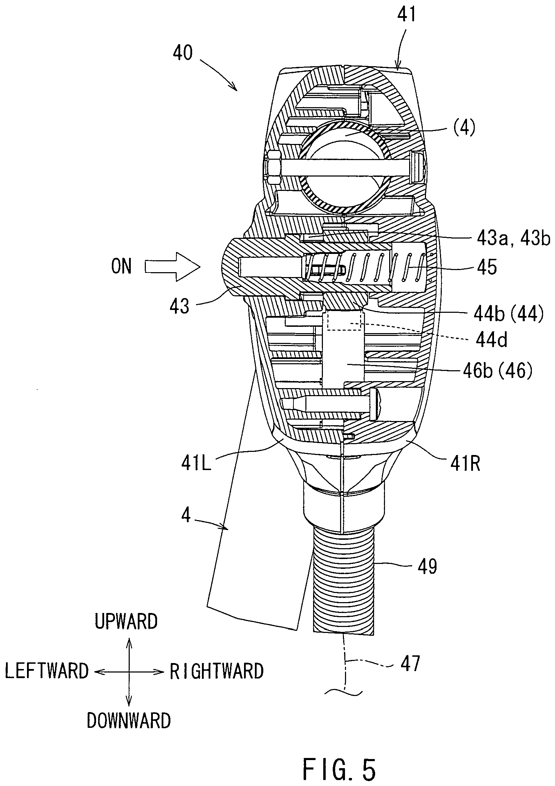

The first operation member 43 may be a cylindrical push-button type operation switch and may be supported by the switch case 41 so as to straddle between the left and right case halves 41L and 41R, so that the first operation member 43 can move in the left and right direction (the direction perpendicular to the sheet plane of Fig. 4) and rotate about a rotational axis (the axis of the cylinder). As shown in Fig. 5, the head portion of the first operation member 43 may protrude outwards from the left-hand side portion (the left-hand side case half 41L side) of the switch case 41.

A compression spring 45 may be interposed between the first operation member 43 and the right-hand side case half 41R in order to bias the first operation member 43 to be restored to the OFF position (to the left). When the user pushes the first operation member 43 with a fingertip against the biasing force of the spring 45, the first operation member 43 may move to the ON position.

The first operation member 43 may have a first engagement portion 43a, a first biasing protrusion 43b, a switch operation portion 43c, and a lever restriction portion 43d, which are formed integrally with each other. On the lateral side in the radial direction (front side) of the first operation member 43, the first engagement portion 43a and the first biasing protrusion 43b may be formed in a stepped configuration (staircase-like configuration) both in the axial direction (left and right direction) and the rotational direction. The first engagement portion 43a may be positioned on the upper side of the first biasing protrusion 43b. The first engagement portion 43a and the first biasing protrusion 43b may be formed in a substantially spiral-staircase-like configuration continuous along the arc about the rotational axis of the first operation member 43. Further, the upper surface of the first engagement portion 43a is formed as a flat surface. Thus, as will be described below, a second engagement portion 44c of the second operation member 44 may contact in face-to-face contact relationship with the upper surface of the first engagement portion 43a.

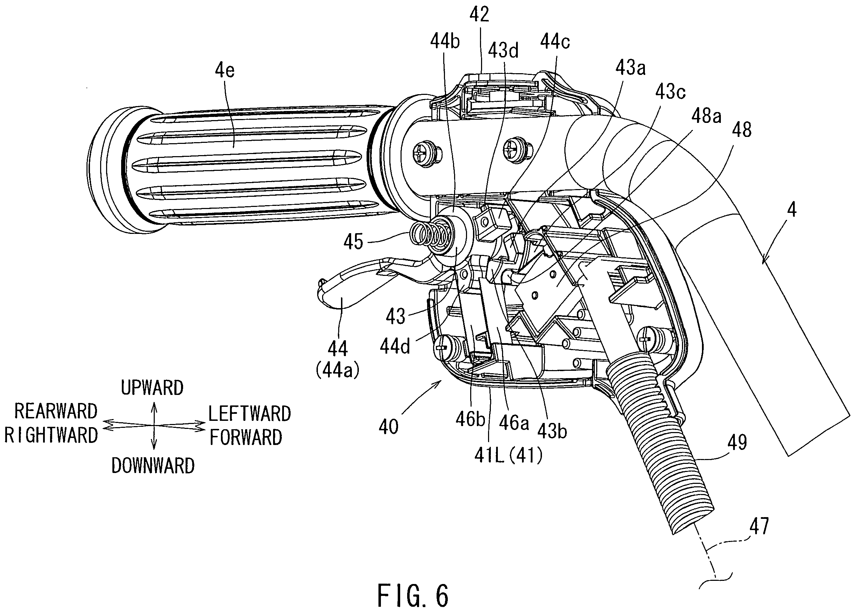

As shown in from Fig. 6, etc., the first biasing protrusion 43b may be formed so as to be longer (higher by one step) than the first engagement portion 43a in the axial direction of the first operation member 43. A first resilient portion 46a (one end portion of a leaf spring 46) may abut the rear surface of the first biasing protrusion 43b. As will be described below, through the operation of pulling the second operation member 44, the first operation member 43 may rotate by a predetermined angle about its axis (clockwise as seen in Fig. 4) against the biasing force applied by the first resilient portion 46a of the leaf spring 46. Further, due to the biasing force applied by the first resilient portion 46a of the leaf spring 46, the first operation member 43 may rotate to return towards the OFF position about its axis.

The switch operation portion 43c may be formed integrally with the first engagement portion 43a and the first biasing protrusion 43b so as to extend along their outer circumferential surfaces. More specifically, the switch operation portion 43c may be configured as a curved plate extending along an arc about the axis of the operation member 43. As described above, through the operation of the first operation member 43 by the operation of pulling the second operation member 44, the switch operation portion 43c may move downwardly along the arc. A switch main body 48 may be positioned on the front side and obliquely on the lower side of the switch operation portion 43c and outside the rotation range of the second operation member 44. As the switch operation portion 43c moves downwardly along the arc, an operation lever 48a of the switch main body 48 may be pressed downwardly to turn ON the switch main body 48. In this way, in the first operation member 43, the first engagement portion 43a for engagement with the second engagement portion 44c of the second operation member 44 and the switch operation portion 43c for engagement with the operation lever 48a of the switch main body 48 are separately provided, whereby the durability of these components may be improved, and thus, the durability of the switch device 40 may be improved.

Further, the arrangement of the switch main body 48 in a region outside the rotation range of the second operation member 44 may ensure that the switch main body 48 is not damaged by a forcible rotating operation of the second operation member 44, which also helps to improve the durability of the switch device 40.

As the switch operation portion 43c moves downwardly along the arc by the rotational movement of the first operation member 43 about is axis, the switch operation portion 43c may interact with the operation lever 48a of the switch main body 48, so that the operation lever 48a may be pressed downwardly toward the side of the ON position to turn ON the switch main body 48. Then the switch main body 48 may output an ON signal that is transmitted to the power source circuit of the main body portion 10 via an electric line 47 arranged in a wiring tube 49.

A lever restriction portion 43d may have a configuration elongated in a manner like a rod in the axial direction of the first operation member 43 and may be positioned on the upper side of the first engagement portion 43a so as to be spaced therefrom by a predetermined distance. A second engagement portion 44c of the second operation member 44 described below may be positioned on the lower side of the lever restriction portion 43d.

As the first operation member 43 is operated to move in the left and right direction (ON/OFF operation), the first engagement portion 43a, the first biasing protrusion 43b, and the switch operation portion 43c may move together in the same direction.

The second operation member 44 may have a lever portion 44a and a support cylindrical portion 44b. The support cylindrical portion 44b may be formed integrally with the base end portion of the lever portion 44a. The first operation member 43 is inserted into the support cylindrical portion 44b without substantial play. The support cylindrical portion 44b is supported so as to be rotatable about a common axis with respect to the first operation member 43. In this way, the second operation member 44 is supported by the first operation member 43 so as to be movable for ON and OFF operations (vertical movement operation of the lever portion 44a).

A second engagement portion 44c and a second biasing protrusion 44d may be formed integrally with the outer peripheral surface of the support cylindrical portion 44b. The second engagement portion 44c may have a configuration like a rectangular prism. As shown in Fig. 4, the second engagement portion 44c and the second biasing protrusion 44d are preferably spaced from each other by approximately 90 degrees and protrude in the radial direction. As described above, the second engagement portion 44c may be positioned on the lower side of the lever restriction portion 43d of the first operation member 43 and between the lever restricting portion 43d and the first engagement portion 43a or the first biasing protrusion 43d.

A second resilient portion 46b (the other end portion of the leaf spring 46) may abut the rear surface of the second biasing protrusion 44d (the front side in the ON-operating direction). As will be described below, if an ON-operation is performed on the second operation member 44 according to the correct operation procedure, the second operation member 44 may be pulled in the ON-direction (the direction in which the lever portion 44a is pulled upwards in Fig. 4) against a biasing force. This biasing force is a combination consisting of the biasing force applied by the second resilient portion 46b of the leaf spring 46 and the biasing force applied by the first resilient portion 46a of the same. When the pulling operation on the lever portion 44a is released after the correct operation procedure, the support cylindrical portion 44b may be rotated counterclockwise as seen in Fig. 4 due to the previously mentioned combined biasing force, so that the lever 44a may return downward to the OFF position.

In this embodiment, the leaf spring 46 may be formed of a single strip-like leaf spring that is bent into a U-shape. The leaf spring 46 thus bent into a U-shape may be fixed to the left-hand side case half 41L, with the first resilient portion 46a and the second resilient portion 46b extending substantially parallel to each other and oriented obliquely upwards.

The switch device 40 constructed as described above may have an unlock function by which the ON-operation of the second operation member 44 becomes effective to turn ON the switch main body 42 only when the first operation member 43 is turned ON first and kept in the ON state. On the other hand, when the second operation member 44 is first turned ON, it is impossible to turn on the first operation member 43 afterwards, so that the switch main body 48 is locked in the OFF state, whereby unintentional starting of the main body portion 10 (the electric motor 13) is prevented. The former operation procedure, in which the first operation member 43 is turned ON first before turning ON the second operation member 44, is the correct operation procedure, whereas the latter operation procedure, in which the second operation member 44 is turned ON before turning ON the first operation member 43, is the erroneous operation procedure.

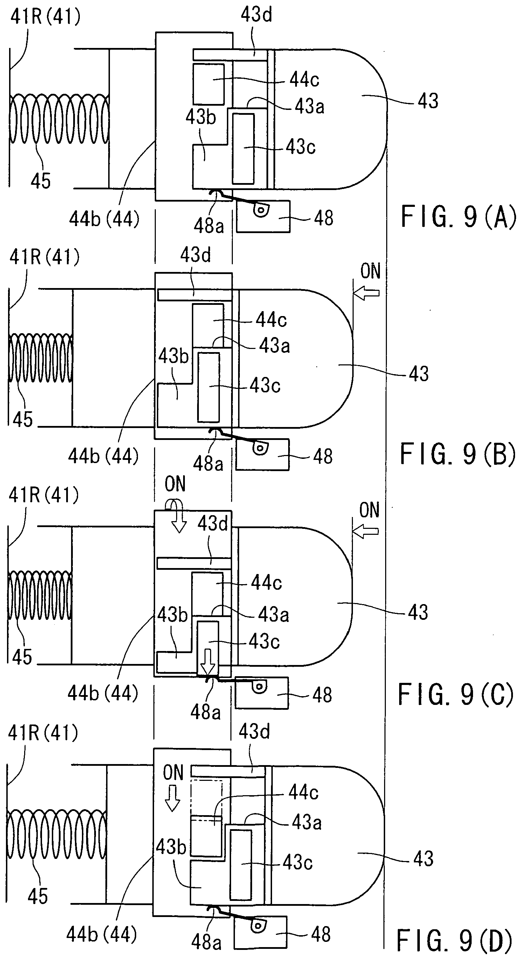

Figs. 9(A), 9(B), 9(C) and 9(D) schematically illustrate the unlock function of the switch device 40. Fig. 9(A) illustrates a non-operating state (initial state), in which none of the first operation member 43 and the second operation member 44 is being operated. In this non-operating state, the head portion of the first operation member 43 is held at the OFF position where it protrudes from the left-hand side case half 41L. Thus, the second engagement portion 44c of the second operation member 44 is held at a position displaced (to the left as seen in Fig. 9(A)) from the position right above the first engagement portion 43a of the first operation member 43.

As shown in Fig. 9(B), if an ON-operation is performed on the first operation member 43 to move it to the left from the non-operating state shown in Fig. 9(A), the first engagement portion 43a moves to the left together with the first operation member 43 to a position below the second engagement portion 44c of the second operation member 44. If the ON-operation is performed on the second operation member 44 after that, the support cylindrical portion 44b rotates in the ON-direction as indicated by the outline arrow in Fig. 9(C), so that the first engagement portion 43a of the first operation member 43 is pressed downwards by the second engagement portion 44c, causing the entire first operation member 43 to rotate about its axis. As the first operation member 43 rotates about its axis by the ON-operation of the second operation member 44, the switch operation portion 43c moves toward the ON-position (downwards in Fig. 9; clockwise in Fig. 4) together with the first operation member 43. When the switch operation portion 43c is thus moved to the ON-position, the operation lever 48a of the switch main body 48 is pressed downwards to thereby turn ON the switch main body 48. When the switch main body 48 is turned ON by the correct operation procedure described above, an ON-signal is output to the main body portion 2 to start the electric motor 10.

After the switch main body 48 has been turned ON by the correct operation procedure, it is only necessary to keep the ON-operation of the second operation member 44. In other words, the user may release the ON-operation of the first operation member 43. By keeping the ON-operation of the second operation member 44, the second engagement portion 44c may be kept in press contact with the first engagement portion 43a of the first operation member 43. Therefore, due to the frictional resistance between the second engaging portion 44c and the first engagement portion 43a, the first operation member 43 may be prevented from rotation and the axial movement toward the OFF position, whereby the first operation member 43 is held at the ON-position. In this way, the ON-state of the switch main body 48 is maintained.

If the ON-operation (pulling operation) of the second operation member 44 is released from this ON-state, the second operation member 44 may return towards the OFF-position by the biasing force applied by the second resilient portion 46b of the leaf spring 46.
As the second operation member 44 returns towards the OFF-position, the first operation member 43 rotates toward the OFF-position with respect to the rotation about the axis due to the biasing force applied by the first resilient portion 46a of the leaf spring 46 and through engagement of the second engagement portion 44c with the lever restriction portion 43d. In addition, the first operation member 43 moves towards the OFF-position with respect to the axial direction. Therefore, the switch main body 48 is turned OFF. In this way, the switch device 40 returns to the non-operating state.

On the other hand, as shown in Fig. 9(D), if the second operation member 44 is first ON-operated in the non-operating state shown in Fig. 9(A) by the erroneous operation procedure without performing the ON-operation of the first operation member 43, the second engagement portion 44c moves downwardly while being displaced to the left with respect to the first engagement portion 43a of the first operation member 43. Therefore, the first engagement portion 43a may not be pressed downwards, so that the first operation member 43 does not rotate about its axis. Hence, the switch operation portion 43c does not move. This means that the switch main body 48 is not turned ON. Accordingly, if the second operation member 44 is ON-operated before ON-operating the first operation member 43, the first operation member 43 does not move to the ON-position, so that the switch main body 48 is not turned ON. As a result, the ON-operation of the second operation member 44 becomes inoperable.

Furthermore, if the second operation member 44 is ON-operated before ON-operating the first operation member 43 (i.e., becomes inoperable), the second engagement portion 44c of the second operation member 44 moves to a position opposed to the left-hand side of the first engagement portion 43a of the first operation member 43 as shown in Fig. 9(D). Therefore, the second engagement portion 44c may constitute an obstacle to prevent the first engagement portion 43a from moving to the left (to the ON-position). Therefore, the first operation member 43 may be locked at the OFF-position and may not be ON-operated. In this way, in the case of the erroneous operation procedure, due to the operational failure of the second operation member 44 and the lock of the first operation member 43 at the OFF-position, the OFF-state of the switch main body 48 can be double-locked.

Further, in the case where, after the ON-operation of the second operation member 44 according to the erroneous operation procedure, an attempt is made to ON-operate the first operation member 43, the first engagement portion 43a of the first operation member 43 may abut the second engagement portion 44c of the second operation member 44 in a substantially face-to-face contact relationship therewith to restrict the ON-operation of the first operation member 43. Therefore, in the case where an attempt is made to ON-operate the first operation member 43 forcibly according to the erroneous operation procedure, the external force may be dispersedly applied from the first engagement portion 43a to the second engagement portion 44c. In this way it makes it is possible to prevent deformation or damage of the two engagement portions 43a and 44c. This makes it possible to improve the durability of the switch device 40.

With the electric cultivator 1 of this embodiment constructed as described above, the switch main body 48 of the switch device 40 may not be turned ON unless both the first operation member 43 and the second operation member are ON-operated (the unlock mechanism). The electric motor 10 of the main body portion 2 may be started only if they are both ON-operated. This makes it possible to prevent unexpected or unintentional ON operation of the main body portion 2.

Further, the switch main body 48 may only be turned ON according to the correct operation procedure, in which the second operation member 44 is ON-operated while keeping the first operation member 43 ON. Even in the case of the erroneous operation procedure, the engagement of the second engagement portion 44c with the first engagement portion 43a is avoided, and the ON-operation of the second operation member 44 becomes ineffective (i.e., results in operational failure), with the result that the switch main body 48 is not turned ON. This also helps to prevent unintentional operation of the main body portion 2 (malfunction preventing function).

Further, in the case of the erroneous operation procedure as described above, the second engagement portion 44c does not interact with the first engagement portion 43a, and the ON-operation of the second operation member becomes ineffective, so that the unlock function can be exerted without applying excessive force to the first engagement portion 43a and the second engagement portion 44c, whereby it is possible to improve the durability of the switch device 40.

Further, in the switch device 40, the switch main body 48 is positioned outside the rotation range of the second operation member 44. Therefore, the switch main body 48 may suffer no damage due to a forcible rotational operation of the second operation member 44 (operational failure in the erroneous operation procedure), which also helps to improve the durability of the switch device 40.

The switch operation portion 43c may be provided at a different position from the first engagement portion 43. The first engagement portion 43 may interact with the second engagement portion 44c of the second operation member 44. The switch operation portion 43c may interact with the operation lever 48a of the switch main body 48. Therefore, as compared with the case where the first engagement portion 43 directly interacts with the switch main body 48 to turn it ON, it is possible to improve the durability of this portion and to eventually improve the durability of the switch device 40.

Further, in the switch device 40 of this embodiment, the first operation member 43 and the second operation member 44 are biased toward the OFF positions with respect to their respective rotational movements. Therefore, a relatively large operational force (biasing force) may be necessary when rotating both the first operation member 43 and the second operation member 44 according to the correct operation procedure. On the other hand, only a relatively small operational force (biasing force) is necessary in order to cause the second operation member 44 to undergo operational failure in an erroneous operation procedure. Thus, the operational force necessary for the erroneous operation procedure may be smaller than the operational force necessary for the correct operation procedure in terms of the biasing force applied to the first operation member 43. In this way, it is possible to provide a difference in operational feel (operational force) for the user between the correct operation procedure and the erroneous operation procedure. In this way it is possible to clearly inform the user whether the operation procedure being followed is correct or erroneous. This may help to improve the switch device 40 in terms of usability (added value).

Further, the biasing member (the first resilient portion 46a) for biasing the first operation member 43 toward the OFF position and the biasing member (the second resilient portion 46b) for biasing the second operation member 44 toward the OFF position are preferably the same, single biasing member (the leaf spring 46). In this way it is possible to reduce the number of components as compared with the case where they are formed by separate biasing means.

The above embodiment may be modified in various ways. For example, while in the above embodiment the leaf spring 46 may be employed as the biasing member for biasing the first operation member 43 and the second operation member 44 toward the OFF positions. The leaf spring 46 may be replaced with some other biasing device such as a compression spring, a tension spring, or a torsion spring. In the above-described embodiment, a single leaf spring 46 is used and the first resilient portion 46a and the second resilient portion 46b are utilized as the biasing devices for the first and second operation members 43 and 44, respectively. It is also possible to bias the operation members toward the OFF-position side by using individual biasing devices.

Further, modifications may be made regarding the biasing devices for biasing the first operation member 43 and the second operation member 44 toward the OFF-position side. It is possible to change the operational feel between the correct operation procedure and the erroneous operation procedure by setting the biasing forces of the leaf spring 46 larger or smaller than that in the above-described example.

Further, while in the above-described example the first operation member 43 and the second operation member 44 are supported so as to be rotatable about the same axis, it is also possible for them to be supported so as to be rotatable about different axes.

Further, while the electric cultivator 1 of the above embodiment is a DC powered electric cultivator using rechargeable batteries as the power source, the above teachings can be also applied to a switch device of an AC powered electric cultivator using an AC power source as the power source.

## Claims

1. An electric cultivator (1) comprising:
an electric motor (10) serving as a drive source; and
a switch device (40) having a first operation member (43), a second operation member (44), and a switch main body (48), wherein:
the electric motor (10) is started through a turning-ON operation of the switch main body (48),
the first operation member (43) includes a first engaging portion (43a);
the second operation member (44) includes a second engaging portion (44c);
when the second operation member (44) is turned ON with the first operation member (43) being turned ON according to a correct operation procedure, the first engaging portion (43a) and the second engaging portion (44c) are engaged with each other to turn ON the switch main body (48);
when the second operation member (44) is turned ON before the first operation member (43) is turned ON according to an erroneous operation procedure, the second engaging portion (44c) does not engage the first engaging portion (43a), so that the switch main body (48) is not turned ON; **characterised in that** the first operation member (43) and the second operation member (44) are rotatable about a common axis;
the second operation member (44) is rotatably supported by the first operation member (43);
the first operation member (43) is movable from an OFF position to an ON position with respect to the axial direction;
the second operation member (44) rotates from an OFF position to an ON position in the rotational direction;
as the second operation member (44) rotates from the OFF position to the ON position while the first operation member (43) is positioned at the ON position, the second engaging portion (44c) engages the first engaging portion (43a) to cause rotation of the first operation member (43), so that the switch main body (48) is turned ON;
the switch device (40) includes a switch case (41);
the first operation member (43) is supported by the switch case (41) so as to be movable in an axial direction and rotatable about the axis;
the second operation member (44) is fixed in position in the axial direction with respect to the switch case (41);
wherein the electric cultivator further comprises a first biasing member (46a) and a second biasing member (46b) configured to respectively bias the first operation member (43) and the second operation member (44) toward OFF positions with respect to rotation, and
wherein the first biasing member (46a) and the second biasing member (46b) are both the same, single biasing member (46).

2. The electric cultivator (1) according to claim 1, wherein the switch main body (48) is positioned outside of a rotation range of the second operation member (44).

3. The electric cultivator (1) according to claim 1 or 2, wherein the first operation member (43) is provided with a switch operating portion (43c) separately from the first engaging portion (43a), and wherein the switch operating portion (43c) is moved through a turning-ON operation of the second operation member (44) according to the correct operation procedure to thereby turn ON the switch main body (48).

4. The electric cultivator (1) according to claim 3, wherein the switch operating portion (43c) and the first engaging portion (43a) are formed integrally with the first operation member (43).

5. The electric cultivator (1) according to any one of the preceding claims, wherein the single biasing member is a leaf spring (46), a compression spring or a tension spring.

## Patentansprüche

1. Elektrische Ackerfräse (1), die umfasst:
einen Elektromotor (10), der als eine Antriebsquelle dient; und
eine Schaltvorrichtung (40) mit einem ersten Bedienelement (43), einem zweiten Bedienelement (44) und einem Schalterhauptkörper (48), wobei:
der Elektromotor (10) durch eine Einschaltbedienung des Schalterhauptkörpers (48) gestartet wird,
das erste Bedienelement (43) einen ersten Eingreifabschnitt (43a) umfasst;
das zweite Bedienfeld (43) einen ersten Eingreifabschnitt (43a);
das zweite Bedienelement (44) einen zweiten Eingreifabschnitt (44c) umfasst;
wenn das zweite Bedienelement (44) gemäß einem korrekten Bedienverfahren eingeschaltet wird, wobei das erste Element (43) eingeschaltet ist, der erste Eingreifabschnitt (43a) und der zweite Eingreifabschnitt (44c) miteinander in Eingriff gebracht werden, um den Schalterhauptkörper (48) einzuschalten;
wenn das zweite Bedienelement (44) gemäß einem fehlerhaften Bedienverfahren eingeschaltet wird, bevor das erste Bedienelement (43) eingeschaltet ist, der zweite Eingreifabschnitt (44c) nicht in den ersten Eingreifabschnitt (43a) eingreift, so dass der Schalterhauptkörper (48) nicht eingeschaltet wird;
**dadurch gekennzeichnet, dass**
das erste Bedienelement (43) und das zweite Bedienelement (44) um eine gemeinsame Achse drehbar sind;
das zweite Bedienelement (44) von dem ersten Bedienelement (43) drehbar gehalten wird;
das erste Bedienelement (43) in Bezug auf die Axialrichtung aus einer AUS-Position in eine EIN-Position beweglich ist;
das zweite Bedienelement (44) sich in der Drehrichtung aus einer AUS-Position in eine EIN-Position dreht;
während das zweite Bedienelement (44) sich von der AUS-Position in die EIN-Position dreht, während das erste Bedienelement (43) in der EIN-Position positioniert ist, der zweite Eingreifabschnitt (44c) in den ersten Eingreifabschnitt (43a) eingreift, um die Drehung des ersten Bedienelements (43) zu bewirken, so dass der Schalterhauptkörper (48) eingeschaltet wird;
die Schaltervorrichtung (40) ein Schaltergehäuse (41) umfasst:
das erste Bedienelement (43) von dem Schaltergehäuse (41) gehalten wird, so dass es in einer Axialrichtung beweglich ist und um die Achse drehbar ist;
das zweite Bedienelement (44) in der Position in der Axialrichtung in Bezug auf das Schaltergehäuse (41) fixiert ist;
wobei die elektrische Ackerfräse ferner ein erstes Vorspannelement (46a) und ein zweites Vorspannelement (46b) aufweist, die aufgebaut sind, um jeweils das erste Bedienelement (43) und das zweite Bedienelement (44) in Bezug auf die Drehung in Richtung von AUS-Positionen vorzuspannen, und
wobei das erste Vorspannelement (46a) und das zweite Vorspannelement (46b) beide dasselbe einzelne Vorspannelement (46) sind.

2. Elektrische Ackerfräse (1) nach Anspruch 1, wobei der Schalterhauptkörper (48) außerhalb eines Drehbereichs des zweiten Bedienelements (44) positioniert ist.

3. Elektrische Ackerfräse (1) nach Anspruch 1 oder 2, wobei das erste Bedienelement (43) getrennt von dem ersten Eingreifabschnitt (43a) mit einem Schalterbedienabschnitt (43c) versehen ist, und wobei der Schalterbedienabschnitt (43c) durch eine Einschaltdrehbedienung des zweiten Bedienelements (44) gemäß dem korrekten Bedienverfahren bewegt wird, um dadurch den Schalterhauptkörper (48) einzuschalten.

4. Elektrische Ackerfräse (1) nach Anspruch 3, wobei der Schalterbedienabschnitt (43c) und der erste Eingreifabschnitt (43a) integral mit dem ersten Bedienelement (43) ausgebildet sind.

5. Elektrische Ackerfräse (1) nach einem der vorhergehenden Ansprüche, wobei das einzelne Vorspannelement eine Blattfeder (46), eine Druckfeder oder eine Zugfeder ist.

## Revendications

1. Bineuse électrique (1) comprenant :
un moteur électrique (10) servant de source d'entraînement ; et
un dispositif de commutateur (40) ayant un premier élément d'opération (43), un second élément d'opération (44) et un corps principal de commutateur (48), dans laquelle :
le moteur électrique (10) est démarré par une opération d'allumage du corps principal de commutateur (48),
le premier élément d'opération (43) inclut une première portion d'engagement (43a) ;
le second élément d'opération (44) inclut une seconde portion d'engagement (44c) ;
lorsque le second élément d'opération (44) est allumé avec le premier élément d'opération (43) qui est allumé en fonction d'une procédure d'opération correcte, la première portion d'engagement (43a) et la seconde portion d'engagement (44c) sont engagées l'une avec l'autre pour allumer le corps principal de commutateur (48) ;
lorsque le second élément d'opération (44) est allumé avant que le premier élément d'opération (43) ne soit allumé en fonction d'une procédure d'opération erronée, la seconde portion d'engagement (44c) ne s'engage pas avec la première portion d'engagement (43a) de sorte que le corps principal de commutateur (48) n'est pas allumé ;
**caractérisée en ce que**
le premier élément d'opération (43) et le second élément d'opération (44) sont rotatifs autour d'un axe commun ;
le second élément d'opération (44) est supporté à rotation par le premier élément d'opération (43) ;
le premier élément d'opération (43) est mobile d'une position éteinte à une position allumée par rapport à la direction axiale ;
le second élément d'opération (44) tourne d'une position éteinte à une position allumée dans la direction rotative ;
alors que le second élément d'opération (44) tourne de la position éteinte à la position allumée tandis que le premier élément d'opération (43) est positionné à la position allumée, la seconde portion d'engagement (44c) s'engage avec la première portion d'engagement (43a) pour provoquer la rotation du premier élément d'opération (43) de sorte que le corps principal de commutateur (48) est allumé ;
le dispositif de commutateur (40) inclut un boîtier de commutateur (41) ;
le premier élément d'opération (43) est supporté par le boîtier de commutateur (41) de manière à être mobile dans une direction axiale et rotatif autour de l'axe ;
le second élément d'opération (44) est fixé en position dans la direction axiale par rapport au boîtier de commutateur (41);
dans laquelle la bineuse électrique comprend en outre un premier élément d'inclinaison (46a) et un second élément d'inclinaison (46b) configurés pour incliner respectivement le premier élément d'opération (43) et le second élément d'opération (44) vers des positions éteintes par rapport à la rotation, et
dans laquelle le premier élément d'inclinaison (46a) et le second élément d'inclinaison (46b) sont tous deux le même élément d'inclinaison unique (46).

2. Bineuse électrique (1) selon la revendication 1, dans laquelle le corps principal de commutateur (48) est positionné en dehors d'une plage de rotation du second élément d'opération (44).

3. Bineuse électrique (1) selon la revendication 1 ou 2, dans laquelle le premier élément d'opération (43) est pourvu d'une portion d'opération de commutateur (43c) séparément de la première portion d'engagement (43a), et dans laquelle la portion d'opération de commutateur (43c) est déplacée par une opération d'allumage du second élément d'opération (44) en fonction de la procédure d'opération correcte pour allumer de ce fait le corps principal de commutateur (48).

4. Bineuse électrique (1) selon la revendication 3, dans laquelle la portion d'opération de commutateur (43c) et la première portion d'engagement (43a) sont intégralement formées du premier élément d'opération (43).

5. Bineuse électrique (1) selon l'une quelconque des revendications précédentes, dans laquelle l'élément d'inclinaison unique est un ressort à lames (46), un ressort de compression ou un ressort de tension.
